(19) **Europäisches Patentamt**
**European Patent Office**
**Office européen des brevets**

(11) **EP 4 336 680 A1**

(12) **EUROPEAN PATENT APPLICATION**
published in accordance with Art. 153(4) EPC

(43) Date of publication:
**13.03.2024 Bulletin 2024/11**

(21) Application number: **22810129.1**

(22) Date of filing: **11.03.2022**

(51) International Patent Classification (IPC):
**H01S 3/067** $^{(2006.01)}$ **H01S 3/16** $^{(2006.01)}$
**H04B 10/2507** $^{(2013.01)}$

(52) Cooperative Patent Classification (CPC):
**H01S 3/067; H01S 3/16; H04B 10/2507**

(86) International application number:
**PCT/CN2022/080265**

(87) International publication number:
**WO 2022/247395 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2021 CN 202110592797**

(71) Applicant: **Huawei Technologies Co., Ltd.
Longgang
Shenzhen, Guangdong 518129 (CN)**

(72) Inventors:
• **LIU, Yehui**
**Shenzhen, Guangdong 518129 (CN)**
• **CAO, Shiyi**
**Shenzhen, Guangdong 518129 (CN)**
• **LI, Jinyan**
**Wuhan, Hubei 430074 (CN)**
• **CHU, Yingbo**
**Wuhan, Hubei 430074 (CN)**

(74) Representative: **Maiwald GmbH
Engineering
Elisenhof
Elisenstrasse 3
80335 München (DE)**

(54) **ERBIUM-DOPED FIBER AND PREPARATION METHOD FOR ERBIUM-DOPED FIBER**

(57) This application discloses an erbium-doped fiber. The erbium-doped fiber can be used in the fields of amplifiers, optical communications, rare-earth-doped fiber preparation, and the like. A fiber core of the erbium-doped fiber includes a first layer and a second layer from inside to outside. The first layer includes a center of the fiber core. The second layer is an annulus, and an outer ring of the annulus is an outer ring of the fiber core. An average doping concentration of erbium ions of the first layer is higher than an average doping concentration of erbium ions of the second layer. In this application, an ASE can be reduced by reducing a doping concentration of erbium ions of the second layer, to further reduce a noise figure of the erbium-doped fiber and improve communications quality.

FIG. 3

EP 4 336 680 A1

## Description

This application claims priority to Chinese Patent Application No. CN202110592797.9, filed with the China National Intellectual Property Administration on May 28, 2021 and entitled "ERBIUM-DOPED FIBER AND PREPARATION METHOD FOR ERBIUM-DOPED FIBER", which is incorporated herein by reference in its entirety.

## TECHNICAL FIELD

This application relates to the fields of amplifiers, optical communications, and rare-earth-doped fiber preparation, and in particular, to an erbium-doped fiber and a preparation method for the erbium-doped fiber.

## BACKGROUND

In an optical communications system, the use of an erbium-doped fiber amplifier (Erbium-Doped Fiber Amplifier, EDFA) to amplify signal light can improve a transmission distance of the signal light. Specifically, the EDFA includes a pump light source, an optical coupler, and an erbium-doped fiber. The pump light source is configured to generate pump light. The optical coupler is configured to couple the signal light and the pump light into the erbium-doped fiber. In the erbium-doped fiber, as an excitation source of the signal light, the pump light amplifies the signal light.

The erbium-doped fiber produces an amplified spontaneous emission (amplified spontaneous emission, ASE) under an action of the excitation source. The ASE increases a noise figure of the erbium-doped fiber and affects communications quality.

## SUMMARY

This application provides an erbium-doped fiber and a preparation method for the erbium-doped fiber. In this application, an ASE can be reduced by reducing a doping concentration of erbium ions of a second layer, so as to further reduce a noise figure of the erbium-doped fiber and improve communications quality.

A first aspect of this application provides an erbium-doped fiber. A fiber core of the erbium-doped fiber includes a first layer and a second layer from inside to outside. The first layer includes a center of the fiber core. The second layer is an annulus, and an outer ring of the annulus is an outer ring of the fiber core. An average doping concentration of erbium ions of the first layer is higher than an average doping concentration of erbium ions of the second layer.

In this application, an ASE can be reduced by reducing a doping concentration of erbium ions of the second layer, so as to further reduce a noise figure of the erbium-doped fiber and improve communications quality. In this case, the average doping concentration of erbium ions of the first layer is higher than the average doping concentration of erbium ions of the second layer.

In an optional manner of the first aspect, the erbium-doped fiber is used in an L band. Compared with a C-band erbium-doped fiber, an L-band erbium-doped fiber has a higher erbium ion concentration. Therefore, the erbium-doped fiber in this application can further reduce a noise system and improve communications quality.

In an optional manner of the first aspect, the average doping concentration of erbium ions of the first layer is higher than the average doping concentration of erbium ions of the second layer by more than M percent, where M is greater than or equal to 30. When erbium ions in the fiber core are evenly distributed, signal light of 0 dBm is used as an input signal of the L-band erbium-doped fiber, and the noise figure of the erbium-doped fiber is usually greater than 6.0 dB, for example, 6.3 dB. The noise figure of the erbium-doped fiber can be effectively reduced by limiting M to be greater than or equal to 30. For example, the noise figure of the erbium-doped fiber can reach below 5.5 dB.

In an optional manner of the first aspect, a value of M is between 30 and 75.6. When a ratio of the average concentration of erbium ions of the first layer to the average concentration of erbium ions of the second layer is continuously increased, a gain of the erbium-doped fiber to the signal light is reduced. This application limits the value of M to be less than 75.6. This can reduce the noise figure of the erbium-doped fiber on the basis of reducing the gain as little as possible.

In an optional manner of the first aspect, a cross-sectional area of the first layer is within N percent of a cross-sectional area of the fiber core, where N is less than or equal to 50. When an area of the first layer is excessively large, an effect of reducing the noise figure is limited. The noise figure of the erbium-doped fiber can be effectively reduced by limiting N to be less than or equal to 50. For example, the noise figure of the erbium-doped fiber can reach below 5.5 dB.

In an optional manner of the first aspect, a value of N is between 20 and 50. When the area of the first layer is continuously reduced, the gain of the erbium-doped fiber to the signal light is reduced. This application limits reduction of the area of the first layer to be greater than or equal to 20 percent. This can reduce the noise figure of the erbium-doped fiber on the basis of reducing the gain as little as possible.

In an optional manner of the first aspect, the average doping concentration of erbium ions of the first layer is between 2742 parts per million (parts per million, ppm) and 2966 ppm. The average doping concentration of erbium ions of the second layer is between 1560 ppm and 2280 ppm. When an average doping concentration of erbium ions in the fiber core is excessively large, the fiber core generates more ASEs, which increases the noise figure of the erbium-doped fiber. When the average doping concentration of erbium ions in the fiber core is excessively small, the gain of the erbium-doped fiber is reduced. In this application, by limiting the average doping concentration of erbium ions in the fiber core, the noise figure of the erbium-doped fiber can be reduced on the basis of reducing the gain as little as possible.

In an optional manner of the first aspect, the first layer includes K sublayers, where K is an integer greater than 1. The second layer includes P sublayers, where P is an integer greater than 0. Doping concentrations of erbium ions of the K sublayers and the P sublayers gradually decrease along the center of the fiber core from inside to outside. A distribution of light intensity in the fiber core is a Gaussian distribution. The closer the distribution of the erbium ions in the fiber core is to the Gaussian distribution, the more effective the noise figure of the optical fiber can be. In this application, the fiber core is divided into K+P sublayers. Doping concentrations of erbium ions of the K+P sublayers gradually decrease along the center of the fiber core from inside to outside, so that the distribution of erbium ions in the fiber core is close to the Gaussian distribution. Therefore, this application can more effectively reduce the noise figure of the erbium-doped fiber.

In an optional manner of the first aspect, both K and P are 2. The K sublayers include a first sublayer and a second sublayer. The P sublayers include a third sublayer and a fourth sublayer. The more sublayers the fiber core has, the closer the distribution of erbium ions in the fiber core is to the Gaussian distribution. However, more sublayers of the fiber core indicate a higher processing cost of the fiber core. This application limits a layer quantity of the fiber core to 4. This can reduce the noise figure of the erbium-doped fiber on the basis of reducing the processing cost as much as possible.

In an optional manner of the first aspect, a range of a doping concentration of erbium ions of the first sublayer is between 2687 ppm and 3087 ppm. A range of a doping concentration of erbium ions of the second sublayer is between 2006 ppm and 2406 ppm. A range of a doping concentration of erbium ions of the third sublayer is between 1028 ppm and 1428 ppm. A range of a doping concentration of erbium ions of the fourth sublayer is between 301 ppm and 701 ppm. The noise figure of the erbium-doped fiber can be effectively reduced when a concentration of erbium ions in the fiber core meets the foregoing conditions. For example, the noise figure of the erbium-doped fiber can reach below 5.5 dB.

In an optional manner of the first aspect, a doping concentration of erbium ions at the center of the fiber core is between 1500 ppm and 4000 ppm.

In an optional manner of the first aspect, a doping concentration of erbium ions in the fiber core satisfies the following relationship: $C(r) = A \times e^{\frac{r^2}{2\beta}}$. A is the doping concentration of erbium ions at the center of the fiber core. C(r) is a doping concentration of erbium ions at a target point, r is a distance between the target point and the center of the fiber core, and β is a correction factor of a negative value.

In an optional manner of the first aspect, a radius of the fiber core is between 0.01 micrometers and 0.3 micrometers.

In an optional manner of the first aspect, the erbium-doped fiber includes the fiber core and cladding from inside to outside.

A second aspect of this application provides a preparation method for an erbium-doped fiber. The preparation method for an erbium-doped fiber includes the following steps:

depositing a loose layer in a base tube, and immersing the loose layer in erbium ion solution;
taking out the loose layer from the erbium ion solution, and drying and vitrifying the loose layer, to obtain a glass rod;
repeating the foregoing two steps for Z times, and gradually increasing a concentration of the erbium ion solution obtained each time, where Z is an integer greater than 1;
sintering the glass rod into a solid glass rod; and
preparing the solid glass rod into the erbium-doped fiber.

In an optional manner of the second aspect, Z is 4. The more sublayers the fiber core has, the closer the distribution of erbium ions in the fiber core is to the Gaussian distribution. However, more sublayers of the fiber core indicate a higher processing cost of the fiber core. This application limits a layer quantity of the fiber core to 4. This can reduce the noise figure of the erbium-doped fiber on the basis of reducing the processing cost as much as possible.

In an optional manner of the second aspect, concentrations of erbium ion solution obtained for Z times are respectively Y1, Y2, Y3 and Y4 mol/L. A difference between Y2 and Y1 is between 0.001 mol/L and 0.004 mol/L. A difference between Y3 and Y2 is between 0.004 mol/L and 0.01 mol/L. A difference between Y4 and Y3 is between 0.01 mol/L and 0.016 mol/L.

A third aspect of this application provides an erbium-doped fiber amplifier EDFA. The EDFA includes a pump light source, an optical coupler, and the erbium-doped fiber according to the first aspect or any optional manner of the first aspect. The pump light source is configured to generate pump light. The optical coupler is configured to receive signal light and the pump light, and couple the signal light and the pump light into the erbium-doped fiber. The erbium-doped fiber is configured to amplify the signal light under an action of the pump light.

A fourth aspect of this application provides an optical communications system. The optical communications system includes a transmit end, a receive end, and the EDFA according to the third aspect. The transmit end is configured to transmit signal light to the receive end by using an optical fiber. The optical fiber is connected to the EDFA, and the EDFA is configured to generate pump light and amplify signal light based on the pump light. The receive end is configured to receive an amplified signal light.

## BRIEF DESCRIPTION OF DRAWINGS

FIG. 1 is a schematic diagram of a distribution of erbium ions in a fiber core;

FIG. 2 is a schematic diagram of a first distribution of erbium ions in a fiber core according to this application;

FIG. 3 is a schematic diagram of a first structure of a fiber core according to this application;

FIG. 4 is a schematic diagram of a second structure of a fiber core according to this application;

FIG. 5 is a schematic diagram of a third structure of a fiber core according to this application;

FIG. 6 is a schematic diagram of a fourth structure of a fiber core according to this application;

FIG. 7 is a schematic diagram of a first structure of an optical communications system according to this application;

FIG. 8 is a schematic diagram of a distribution of noise figures of an erbium-doped fiber on different wavelengths;

FIG. 9 is a schematic diagram of a first distribution of noise figures of an erbium-doped fiber according to this application;

FIG. 10 is a schematic diagram of a second distribution of noise figures of an erbium-doped fiber according to this application;

FIG. 11 is a schematic diagram of a second distribution of erbium ions in a fiber core according to this application;

FIG. 12 is a schematic diagram of a structure of an erbium-doped fiber in a preparation process according to this application;

FIG. 13 is a schematic diagram of a structure of an EDFA according to this application; and

FIG. 14 is a schematic diagram of a second structure of an optical communications system according to this application.

## DESCRIPTION OF EMBODIMENTS

This application provides an erbium-doped fiber and a preparation method for the erbium-doped fiber. In this application, an ASE can be reduced by reducing a doping concentration of erbium ions of a second layer, to further reduce a noise figure of the erbium-doped fiber and improve communications quality. It should be understood that terms "first", "second", and the like in this application are for descriptive purposes only and should not be construed as indicating or implying relative importance or be construed as indicating or implying a sequence. In addition, for brevity and clarity, reference numbers and/or letters are repeated in a plurality of accompanying drawings of this application. The repetition does not indicate that there is a strict restrictive relationship between various embodiments and/or configurations.

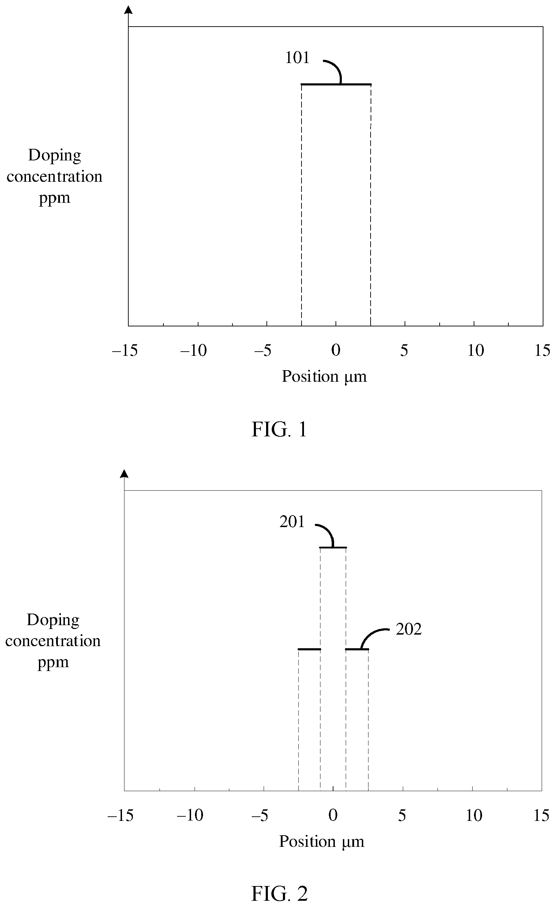

The erbium-doped fiber in this application is used in the field of optical communications. In the field of optical communications, an erbium-doped fiber in an amplifier is configured to amplify signal light under an action of an excitation source. The signal light is transmitted in a fiber core of the erbium-doped fiber. When erbium ions in the fiber core are evenly distributed, the amplifier generates a large noise figure. Specifically, FIG. 1 is a schematic diagram of a distribution of erbium ions in a fiber core. As shown in FIG. 1, a horizontal coordinate is a position of the fiber core, where a unit is micrometer $\mu$m. In FIG. 1, a center of the fiber core is located at a coordinate 0. A radius of the fiber core is 2.5 micrometers, and a diameter of the fiber core is 5 micrometers. A vertical coordinate is a doping concentration of erbium ions in the fiber core, where a unit is ppm. The erbium ions are evenly distributed in the fiber core. Therefore, a concentration 101 is a straight line. It should be understood that, in an actual processing process, a processing technology cannot guarantee that concentrations of the points in the fiber core are the same. Therefore, the concentration 101 may alternatively be a curve that fluctuates up and down.

The erbium ions in the fiber core transit from a ground state to an upper energy level under an action of an excitation source. When the signal light is injected into the fiber core, light intensity of the signal light is mainly distributed in an inner layer of the fiber core. Upper-energy-level erbium ions of the inner layer generate stimulated radiation, to amplify the signal light. In an outer layer of the fiber core, the upper-energy-level erbium ions cannot obtain enough signal light for the stimulated radiation, and spontaneously transit from an excited state to the ground state, to generate an ASE. The ASE is a main noise source of an amplifier or an erbium-doped fiber. Specifically, the following is a formula for calculating a noise figure NF.

$$NF = 10\log(\frac{P_{ASE}}{hvBG} + \frac{1}{G})$$

$P_{ASE}$ is a noise power of the amplifier or the erbium-doped fiber, and the noise power is generated by the ASE. h is a Planck constant. v is a signal light frequency. B is a detection line width of a spectrometer. G is a gain of the amplifier. When the gain of the amplifier remains unchanged, the NF is closely related to $P_{ASE}$ of the amplifier. Specifically, a larger $P_{ASE}$ indicates a larger NF, and a smaller $P_{ASE}$ indicates a smaller NF. Therefore, when a large quantity of ASEs are generated at the outer layer of the fiber core, the erbium-doped fiber generates a large noise figure.

Therefore, this application provides the erbium-doped fiber. In the fiber core of the erbium-doped fiber, the doping concentration of erbium ions of the outer layer is reduced, so as to further reduce the ASE and the noise figure of the erbium-doped fiber. In this case, an average doping concentration of erbium ions of the inner layer of the fiber core is higher than an average doping concentration of erbium ions of the outer layer of the fiber core. For example, FIG. 2 is a schematic diagram of a first distribution of erbium ions in a fiber core according to this application. As shown in FIG. 2, the average doping concentration of erbium ions of the inner layer of the fiber core is a concentration 201. The average doping concentration of erbium ions of the outer layer of the fiber core is a concentration 202. The concentration 202 is less than the concentration 201. It should be understood that, in an actual processing process, a processing technology cannot guarantee that a concentration of each point in the fiber core is the same. Therefore, the concentration 201 and the concentration 201 may alternatively be a curve that fluctuates up and down. Similarly, in subsequent descriptions, "a doping concentration of erbium ions of the first sublayer is the same" means "the doping concentration of erbium ions of the first sublayer is approximately the same".

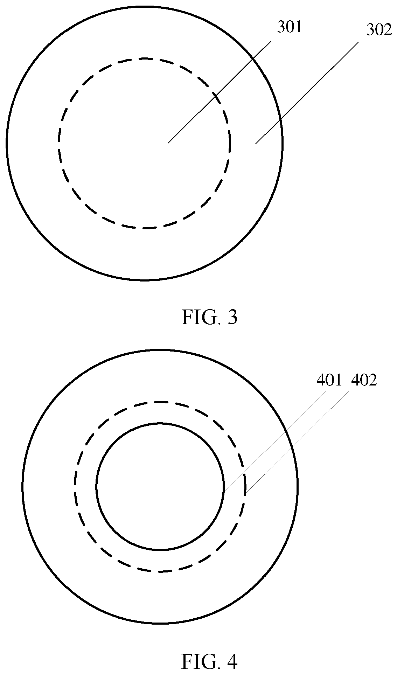

The foregoing describes the average doping concentration of erbium ions in the fiber core in this application, and the following describes a fiber core structure in this application. FIG. 3 is a schematic diagram of a first structure of a fiber core according to this application. As shown in FIG. 3, the fiber core includes a first layer 301 and a second layer 302. The first layer 301 is alternatively referred to as an inner layer, and the second layer 302 is alternatively referred to as an outer layer. The first layer 301 may be a circular. The first layer 301 includes a center of the fiber core. The second layer is an annulus. An outer ring of the annulus is an outer ring of the fiber core. An average doping concentration of erbium ions of the first layer 301 is higher than an average doping concentration of erbium ions of the second layer 302.

It should be understood that when the fiber core includes two sublayers, a boundary line between the first layer 301 and the second layer 302 may or may not overlap with a boundary line between the two sublayers.

When the two boundary lines overlap, there is a sudden change of a doping concentration of erbium ions at a boundary line. Specifically, as shown in FIG. 3, the two sublayers include a first sublayer and a second sublayer. The first layer 301 is the first sublayer, and the second layer 302 is the second sublayer. A doping concentration of erbium ions of the first sublayer is the same. A doping concentration of erbium ions of the second sublayer is the same. In this case, because the doping concentration of erbium ions of the first sublayer is greater than the doping concentration of erbium ions of the second sublayer, there is a sudden change of the doping concentration of erbium ions at the boundary lines.

When the two boundary lines do not overlap, there is a sudden change of a doping concentration of erbium ions at a boundary line of the two sublayers. There is no sudden change of a doping concentration of erbium ions at a boundary line of the first layer 301 and the second layer 302. Specifically, FIG. 4 is a schematic diagram of a second structure of a fiber core according to this application. As shown in FIG. 4, the fiber core includes a first boundary line 401 and a second boundary line 402. The first boundary line 401 divides the fiber core into a first sublayer and a second sublayer. The first sublayer is within the first boundary line 401, and a doping concentration of erbium ions of the first sublayer is the same. The second sublayer is outside the second boundary line 401, and a doping concentration of erbium ions in the second sublayer is the same. The doping concentration of erbium ions of the first sublayer is higher than the doping concentration of erbium ions of the second sublayer. Therefore, there is a sudden change of a doping concentration of erbium ions at the first boundary line 401. The second boundary line 402 divides the fiber core into a first layer and a second layer. The first layer is within the second boundary line 402, and the second layer is outside the second boundary line 402. The average doping concentration of erbium ions of the first layer is higher than the average doping concentration of erbium ions of the second layer. However, because the doping concentration of erbium ions of the first sublayer is the same, and the second boundary line 402 is within the first sublayer, there is no sudden change of a doping concentration of erbium ions at the second boundary line 402.

In another embodiment, all layer boundary lines overlap with sublayer boundary lines in the fiber core. The layer boundary line is a boundary line between "layers", and the sublayer boundary line is a boundary line between "sublayers".

In the accompanying drawings of this application, a solid line represents a boundary line or a dividing line at which there is a sudden change of the doping concentration of erbium ions, and two sides of the solid line are different "sublayers". For a definition of the "sublayer", refer to subsequent descriptions of the sublayer in the preparation method for the erbium-doped fiber. Two sides of a dotted line are different "layers".

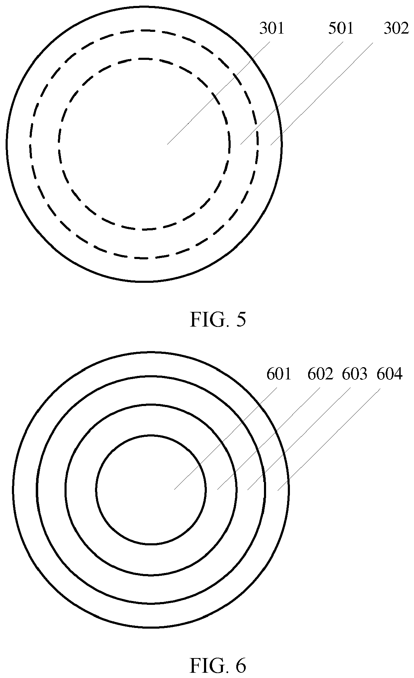

FIG. 5 is a schematic diagram of a third structure of a fiber core according to this application. As shown in FIG. 5, the fiber core includes a first layer 301 and a second layer 302. The first layer 301 includes a center of the fiber core. An outer ring of the second layer 302 is an outer ring of the fiber core. The average doping concentration of erbium ions of the first layer 301 is higher than the average doping concentration of erbium ions of the second layer 302.

In another embodiment, the fiber core further includes another layer between the first layer and the second layer. For example, as shown in FIG. 5, the fiber core further includes a third layer 501. The third layer 501 is between the first layer 301 and the second layer 302. An average doping concentration of erbium ions of the third layer 501 is less than the average doping concentration of erbium ions of the first layer 301, and the average doping concentration of erbium ions of the second layer 302 is less than the doping concentration of erbium ions of the third layer 501.

It should be understood that in the fiber core in this application, the "layer" may include one or more "sublayers". For example, the first layer includes K sublayers, where K is an integer greater than 0. In an instance, K is an integer greater than 1. The second layer includes P sublayers, where P is an integer greater than 0. A distribution of light intensity in the fiber core is a Gaussian distribution. The closer the distribution of the erbium ions in the fiber core is to the Gaussian distribution, the more effectively the noise figure of erbium-doped fiber can be reduced. Therefore, this application may limit that along the center of the fiber core from inside to outside, a doping concentration of erbium ions of K+P sublayers gradually decreases to enable the distribution of erbium ions in the fiber core to be close to the Gaussian distribution.

The more sublayers the fiber core has, the closer the distribution of erbium ions in the fiber core is to the Gaussian distribution. However, more sublayers of the fiber core indicate a higher processing cost of the fiber core. This application may limit K and P to 2 to reduce the noise figure of the erbium-doped fiber on the basis of reducing the processing cost as much as possible. In this case, the K sublayers include a first sublayer and a second sublayer. The P sublayers include a third sublayer and a fourth sublayer. Specifically, FIG. 6 is a schematic diagram of a fourth structure of a fiber core according to this application. As shown in FIG. 6, the fiber core includes a first sublayer 601, a second sublayer 602, a third sublayer 603, and a fourth sublayer 604. The first sublayer 601 and the second sublayer 602 belong to the first layer. The third sublayer 603 and the fourth sublayer 604 belong to the second layer. Doping concentrations of erbium ions of the first sublayer 601, the second sublayer 602, the third sublayer 603, and the fourth sublayer 604 gradually decrease from inside to outside along the center of the fiber core.

In another embodiment, the erbium-doped fiber in this application is used in an L band. Specifically, a gain coefficient of signal light in the L band is low in the erbium-doped fiber. Therefore, in order to increase the gain of the erbium-doped fiber amplifier, the doping concentration of erbium ions of the erbium-doped fiber needs to be increased. For example, when the erbium-doped fiber is used in a C band, the doping concentration of erbium ions of the erbium-doped fiber is usually between 300 ppm and 500 ppm. When the erbium-doped fiber is used in the L band, the doping concentration of erbium ions of the erbium-doped fiber should usually be greater than 1500 ppm. An outer layer of the erbium-doped fiber contains more erbium ions by increasing the doping concentration of erbium ions in the erbium-doped fiber. More erbium ions produce a larger ASE, and further produce a larger noise figure. For example, a noise figure of a C-band erbium-doped fiber amplifier is usually less than 5 dB. A noise figure of an L band erbium-doped fiber amplifier is usually greater than 6 dB. Therefore, in the L band, it is important to reduce the doping concentration of erbium ions of the outer layer of the erbium-doped fiber, to reduce the noise figure.

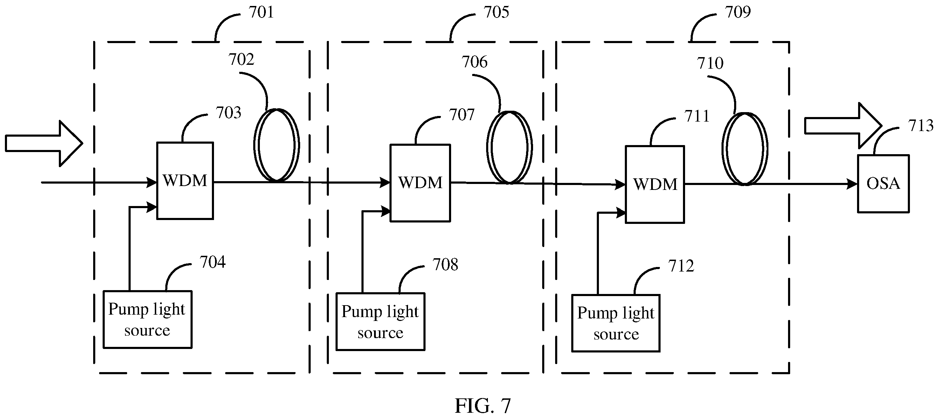

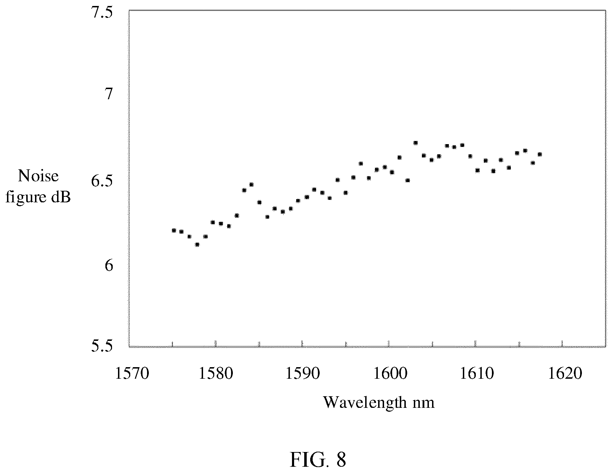

It can be learned from the foregoing description that when the erbium ions in the fiber core are evenly distributed, the amplifier generates a large noise figure. The following is a description of a specific experimental scenario. FIG. 7 is a schematic diagram of a first structure of an optical communications system according to this application. As shown in FIG. 7, the optical communications system includes an optical amplifier 701, an optical amplifier 705, an optical amplifier 709, and an optical spectrum analyzer (optical spectrum analyzer, OSA) 713. The optical amplifier 701 includes a pump light source 704, a wavelength division multiplexer (Wavelength Division Multiplexer, WDM) 703, and an erbium-doped fiber 702. The pump light source 704 is configured to generate pump light. The WDM 703 is configured to couple the signal light and the pump light into the erbium-doped fiber 702. In the erbium-doped fiber 702, as an excitation source of the signal light, the pump light amplifies the signal light. Similarly, the optical amplifier 705 includes a pump light source 708, a wavelength division multiplexer WDM 707, and an erbium-doped fiber 706. The optical amplifier 709 includes a pump light source 712, a wavelength division multiplexer WDM 711, and an erbium-doped fiber 710. In the optical communications system in FIG. 7, a three-stage amplification of the signal light is implemented. The OSA 713 is configured to measure a noise figure of the signal light after the three-stage amplification. When erbium ions in the erbium-doped fiber 702, the erbium-doped fiber 706, and the erbium-doped fiber 710 are evenly distributed, the noise figure of the amplifier is measured by using 0 dBm L-band signal light as an input signal. The noise figure of the amplifier may alternatively be referred to as the noise figure of the erbium-doped fiber. FIG. 8 is a schematic diagram of a distribution of noise figures of an erbium-doped fiber on different wavelengths. As shown in FIG. 8, a horizontal coordinate is a wavelength, where a unit is nanometer nm. A vertical coordinate is a noise figure, where a unit is dB. In a range of 1575 nm to 1618 nm, a maximum noise figure of the amplifier is 6.6 dB, and an average noise figure is approximately 6.3 dB.

The optical communications system in FIG. 7 is used to measure the noise figure of the erbium-doped fiber amplifier in this application. The schematic diagram of the structure of the erbium-doped fiber is shown in FIG. 3.

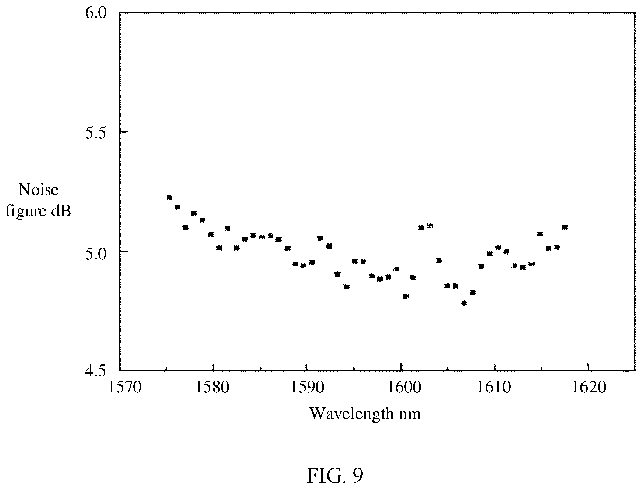

In an experiment 1, an area of the first layer 301 accounts for 50% of an area of the fiber core. The average doping concentration of erbium ions of the first layer 301 is 2742 ppm. The average doping concentration of erbium ions of the second layer 302 is 1560 ppm. The average doping concentration of erbium ions of the first layer 301 is 75.6% higher than the average doping concentration of erbium ions of the second layer 302. FIG. 9 is a schematic diagram of a first distribution of noise figures of an erbium-doped fiber according to this application. As shown in FIG. 9, in a range of 1575 nm to 1618 nm, a maximum noise figure of the erbium-doped fiber amplifier is 5.2 dB, and the average noise figure is less than 5 dB.

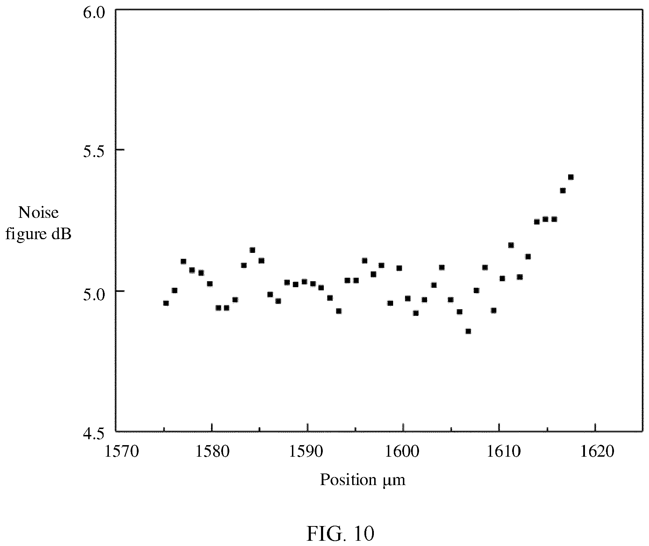

In an experiment 2, an area of the first layer 301 accounts for 20% of an area of the fiber core. The average doping concentration of erbium ions of the first layer 301 is 2966 ppm. The average doping concentration of erbium ions of the second layer 302 is 2280 ppm. The average doping concentration of erbium ions of the first layer 301 is 30% higher than the average doping concentration of erbium ions of the second layer 302. FIG. 10 is a schematic diagram of a second distribution of noise figures of an erbium-doped fiber according to this application. As shown in FIG. 10, in a range of 1575 nm to 1618 nm, a maximum noise figure of the erbium-doped fiber amplifier is 5.4 dB, and the average noise figure is less than 5.2 dB.

The average doping concentration of erbium ions of the first layer is defined to be higher than the average doping concentration of erbium ions of the second layer by more than M percent. It can be learned from the foregoing experiments that, when a value of M is between 30 and 75.6, the average noise figure of the erbium-doped fiber amplifier is less than 5.5 dB. A cross-sectional area of the first layer is defined to be within N percent of a cross-sectional area of the fiber core. It can be learned from the foregoing experiments that, when a value of N is between 20 and 50, the average noise figure of the erbium-doped fiber amplifier is less than 5.5 dB. It can be learned from the foregoing experiments that, when the average doping concentration of erbium ions of the first layer is between 2742 ppm and 2966 ppm, and the average doping concentration of erbium ions of the second layer is between 1560 ppm and 2280 ppm, the average noise figure of the erbium-doped fiber amplifier is less than 5.5 dB.

When the fiber core in FIG. 6 is used to measure the noise figure of the erbium-doped fiber amplifier, an experimental result similar to that in FIG. 9 may be obtained. In this case, an area of the first sublayer 601 accounts for 19% of the area of the fiber core, and a doping concentration of erbium ions of the first sublayer 601 is 2887 ppm. An area of the second sublayer 602 accounts for 26% of the area of the fiber core, and a doping concentration of erbium ions of the second sublayer 602 is 2206 ppm. An area of the third sublayer 603 accounts for 27% of the area of the fiber core, and a doping concentration of erbium ions of the third sublayer 603 is 1228 ppm. An area of the fourth sublayer 604 accounts for 28% of the area of the fiber core, and a doping concentration of erbium ions of the fourth sublayer 604 is 501 ppm. Because an error may occur during fiber core processing, the error is defined as ±200 ppm. In this case, a range of the doping concentration of erbium ions of the first sublayer 601 is between 2687 ppm and 3087 ppm. A range of the doping concentration of erbium ions of the second sublayer 602 is between 2006 ppm and 2406 ppm. A range of the doping concentration of erbium ions of the third sublayer 603 is between 1028 ppm and 1428 ppm. A range of the doping concentration of erbium ions of the fourth sublayer 604 is between 301 ppm and 701 ppm.

In another embodiment, the Gaussian distribution of the erbium ions in the fiber core is implemented by increasing a layer quantity of the sublayers in the fiber core. Specifically, the doping concentration of erbium ions of the fiber core satisfies the following relationship.

$$C(r) = A \times e^{\frac{r^2}{2\beta}}$$

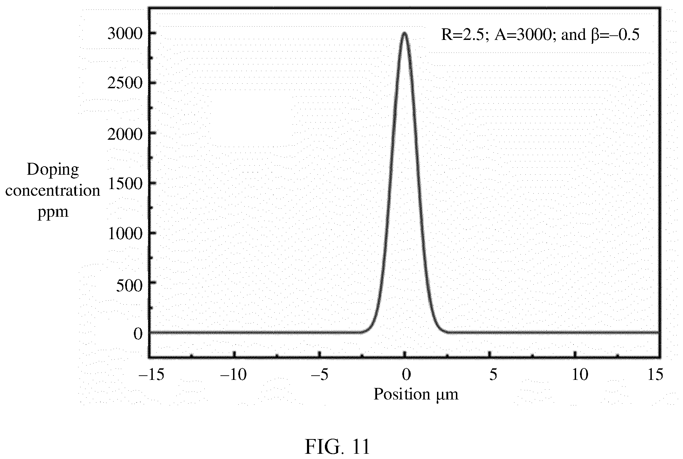

A is the doping concentration of erbium ions at the center of the fiber core. A range of A is between 1500 ppm and 4000 ppm. C(r) is a doping concentration of erbium ions at a target point, r is a distance between the target point and the center of the fiber core. r is less than or equal to R. R is a radius of the fiber core. A range of R is between 0.01 micrometers and 0.3 micrometers. $\beta$ is a correction factor of a negative value. Specifically, FIG. 11 is a schematic diagram of a second distribution of erbium ions in a fiber core according to this application. As shown in FIG. 11, when R is equal to 2.5, A is equal to 3000, and $\beta$ is equal to -0.5, the distribution of the erbium ions in the fiber core approaches the Gaussian distribution.

The foregoing describes the erbium-doped fiber in this application. The following describes a preparation method for an erbium-doped fiber in this application. The preparation method for an erbium-doped fiber includes the following steps.

In step 1, a loose layer is deposited in a base tube, and the loose layer is immersed in erbium ion solution.

First, the base tube is pretreated to preheat the base tube and effectively eliminate impurities and bubbles on an inner wall of the base tube. Then, raw materials are fed into the base tube by using an MCVD device. Under a heating condition of a heat source hydrogen-oxygen torch, the raw materials are chemically reacted to generate fine particles such as silicon dioxide, phosphorus pentoxide, silicon fluoride, and boron trioxide. Under a thermophoresis effect and gas in the tube, the fine particles are deposited on the inner surface of the base tube. At a low heating temperature (for example, between 1300°C and 1500°C), a white opaque porous loose layer is formed, where a length between of the loose layer is between 150 mm and 300 mm.

In an ultra-clean environment, rare-earth co-doped raw materials are dissolved into solution of alcohol or hydrochloric acid in a specific proportion to obtain mixed solution. The mixed solution includes ions such as an erbium ion Er3+, a phosphorus ion P5+, an aluminum ion Al3+, and lanthanum La3+. Therefore, the mixed solution is also referred to as erbium ion solution. An obtained loose body is soaked into the prepared mixed solution. In a soaking process, the base tube may be placed in a rotary lathe to enable the base tube to rotate at a speed of 30 rotations/minute. A rare-earth co-doped ion penetrates into the loose layer through surface adsorption.

In step 2, the loose layer is taken out from the erbium ion solution, and the loose layer is dried and vitrified, to obtain a glass rod.

After two hours of soaking, the erbium ion solution is poured out. Preliminary nitrogen drying is performed on the base tube. In order to reduce a background loss of the erbium-doped fiber, the preliminarily dried base tube may be heated to 800°C to 1000°C, to further remove residual hydroxy ions in the loose layer. After the drying is completed, the loose layer is heated to 1500°C to sinter into a transparent and compact glass rod. Gas including P5+ is then introduced for gas phase compensation to improve a doping concentration of P5+. Finally, the doped elements are fastened to the glass rod to form a non-porous glass layer.

Step 1 and step 2 are repeated for Z times, and a concentration of erbium ion solution obtained each time is gradually increased, where Z is an integer greater than 1.

In step 3, the glass rod is sintered into a solid glass rod.

The process of sintering a vitrified glass rod into a solid glass rod at a high temperature is also referred to as collapse.

In step 4, the solid glass rod is prepared into the erbium-doped fiber. The solid glass rod is attenuated to the erbium-doped fiber.

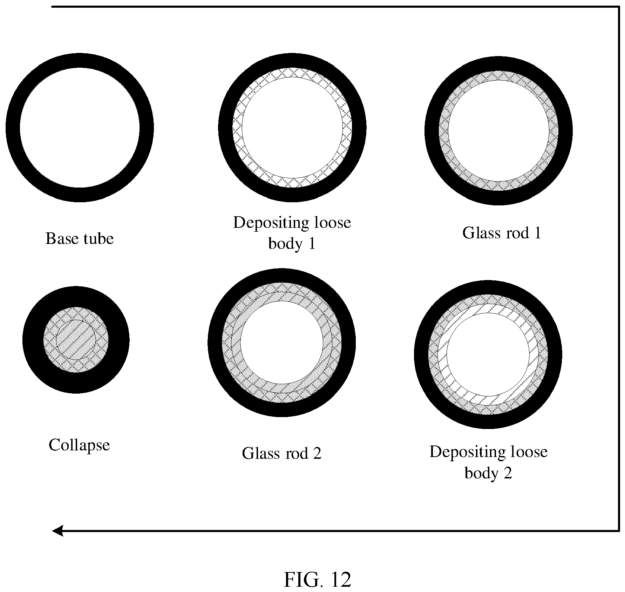

In the preparation method for an erbium-doped fiber in this application, Z is an integer greater than 0. The preparation method for an erbium-doped fiber in this application is described by using an example in which Z is 2. FIG. 12 is a schematic diagram of a structure of an erbium-doped fiber in a preparation process according to this application. As shown in FIG. 12, first, in step 1, the base tube is provided, and a loose body 1 is deposited in the base tube. The loose body 1 is immersed in erbium ion solution 1. Then, in step 2, the loose body 1 is dried and vitrified to obtain a glass rod 1. Then, step 1 and step 2 are repeated. Specifically, a loose body 2 is deposited in the glass rod 1. The loose body 2 is immersed in erbium ion solution 2. A concentration of the erbium ion solution 2 is greater than a concentration of the erbium ion solution 1. The loose body 2 is dried and vitrified to obtain a glass rod 2. Finally, in step 3, the glass rod 2 is collapsed to obtain a solid glass rod. In step 4, the solid glass rod is prepared into the erbium-doped fiber.

In a doped fiber obtained by using the preparation method in this application, a quantity of sublayers of a fiber core is Z. For example, when Z is 2, step 1 and step 2 in the preparation method are performed twice in total. In the preparation process, two loose layers are obtained through deposition. The two loose layers respectively correspond to two sublayers of the fiber core. For example, when Z is 4, step 1 and step 2 in the preparation method are performed for four times in total. In the preparation process, four loose layers are obtained through deposition. The four loose layers respectively correspond to four sublayers of the fiber core.

In the preparation process, when Z is equal to 4, the four loose layers are obtained through deposition. The four loose layers are respectively immersed in erbium ion solution 1 of different concentrations. The concentrations of the erbium ion solution obtained for four times are respectively Y1, Y2, Y3, and Y4 mol/L. A difference between Y2 and Y1 is between 0.001 mol/L and 0.004 mol/L. A difference between Y3 and Y2 is between 0.004 mol/L and 0.01 mol/L. A difference between Y4 and Y3 is between 0.01 mol/L and 0.016 mol/L. By gradually increasing the concentration of the erbium ion solution each time, an average doping concentration of erbium ions of an outer layer of the fiber core is lower than an average doping concentration of erbium ions of an inner layer of the fiber core.

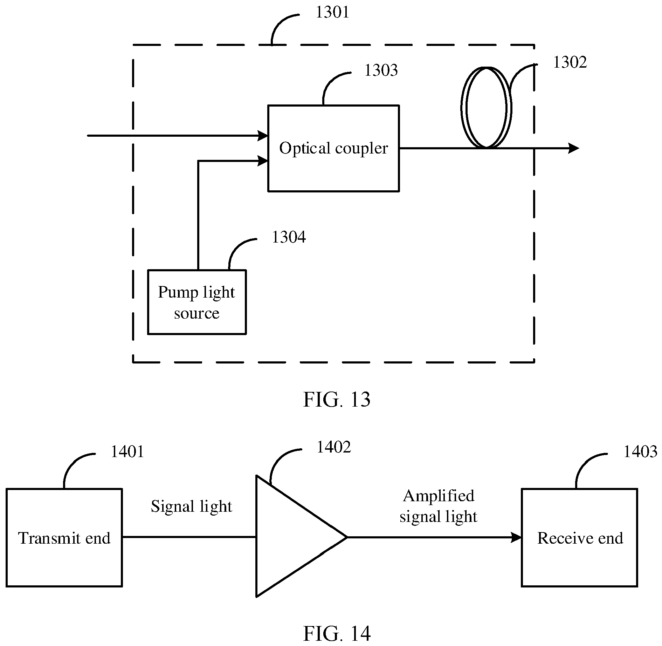

The foregoing describes the preparation method for the erbium-doped fiber in this application, and the following describes an EDFA according to this application. FIG. 13 is a schematic diagram of a structure of an EDFA according to this application. As shown in FIG. 13, an EDFA 1301 includes a pump light source 1304, an optical coupler 1303, and an erbium-doped fiber 1302. The optical coupler 1303 can be a WDM. The pump light source 1304 is configured to generate pump light. The optical coupler 1303 is configured to receive signal light and the pump light, and couple the signal light and the pump light into the erbium-doped fiber 1302. The erbium-doped fiber 1302 is configured to amplify the signal light under an action of the pump light. For the description of the erbium-doped fiber, reference may be made to a previous description of the erbium-doped fiber and the preparation method for the erbium-doped optical fiber.

The foregoing describes the EDFA in this application, and the following describes an optical communications system according to this application. FIG. 14 is a schematic diagram of a second structure of an optical communications system according to this application. As shown in FIG. 14, the optical communications system includes a transmit end 1401, a receive end 1403, and an EDFA 1402. The transmit end 1401 is configured to transmit signal light to the receive end 1403 by using an optical fiber. The optical fiber is connected to the EDFA 1402. The EDFA 1402 is configured to generate pump light and amplify signal light based on the pump light. The receive end 1403 is configured to receive an amplified signal light. For a description of the EDFA 1402, reference may be made to a previous description of the EDFA 1301.

In another embodiment, a plurality of EDFAs 1402 may be connected in series between the transmit end 1401 and the receive end 1403. The plurality of EDFAs 1402 is configured to amplify the signal light for a plurality of times.

The foregoing descriptions are merely specific implementations of this application, but are not intended to limit a protection scope of this application. Any variation or replacement readily figured out by a person skilled in the art within the technical scope disclosed in this application should fall within the protection scope of this application.

**Claims**

1. An erbium-doped fiber, wherein a fiber core of the erbium-doped fiber comprises a first layer and a second layer from inside to outside, the first layer comprises a center of the fiber core, the second layer is an annulus, an outer ring of the annulus is an outer ring of the fiber core, and an average doping concentration of erbium ions of the first layer is higher than an average doping concentration of erbium ions of the second layer.

2. The erbium-doped fiber according to claim 1, wherein the erbium-doped fiber is used in an L band.

3. The erbium-doped fiber according to claim 1 or 2, wherein the average doping concentration of erbium ions of the first layer is higher than the average doping concentration of erbium ions of the second layer by more than M percent, wherein M is greater than or equal to 30.

4. The erbium-doped fiber according to claim 3, wherein a value of M is between 30 and 75.6.

5. The erbium-doped fiber according to any one of claims 1 to 4, wherein the average doping concentration of erbium ions of the first layer is between 2742 parts per million ppm and 2966 ppm, and the average doping concentration of erbium ions of the second layer is between 1560 ppm and 2280 ppm.

6. The erbium-doped fiber according to any one of claims 1 to 5, wherein a cross-sectional area of the first layer is within N percent of a cross-sectional area of the fiber core, wherein N is less than or equal to 50.

7. The erbium-doped fiber according to claim 6, wherein a value of N is between 20 and 50.

8. The erbium-doped fiber according to any one of claims 1 to 7, wherein the first layer comprises K sublayers, K is an integer greater than 1, the second layer comprises P sublayers, and P is an integer greater than 0, wherein doping concentrations of erbium ions of the K sublayers and the P sublayers gradually decrease along the center of the fiber core from inside to outside.

9. The erbium-doped fiber according to claim 8, wherein K and P are 2, the K sublayers comprise a first sublayer and a second sublayer, the P sublayers comprise a third sublayer and a fourth sublayer, a range of a doping concentration of erbium ions of the first sublayer is between 2687 ppm and 3087 ppm, a range of a doping concentration of erbium ions of the second sublayer is between 2006 ppm and 2406 ppm, a range of a doping concentration of erbium ions of the third sublayer is between 1028 ppm and 1428 ppm, and a range of a doping concentration of erbium ions of the fourth sublayer is between 301 ppm and 701 ppm.

10. The erbium-doped fiber according to any one of claims 1 to 9, wherein a doping concentration of erbium ions at the center of the fiber core is between 1500 ppm and 4000 ppm.

11. The erbium-doped fiber according to any one of claims 1 to 10, wherein a doping concentration of erbium ions of the fiber core satisfies the following relationship:

$$C(r) = A \times e^{\frac{r^2}{2\beta}},$$

wherein
A is the doping concentration of erbium ions at the center of the fiber core, C(r) is a doping concentration of erbium ions at a target point, r is a distance between the target point and the center of the fiber core, and β is a correction factor of a negative value.

12. The erbium-doped fiber according to any one of claims 1 to 11, wherein a radius of the fiber core is between 0.01 micrometers and 0.3 micrometers.

13. The erbium-doped fiber according to any one of claims 1 to 12, wherein the erbium-doped fiber comprises the fiber core and cladding from inside to outside.

14. A preparation method for an erbium-doped fiber, comprising:

depositing a loose layer in a base tube, and immersing the loose layer in erbium ion solution; taking out the loose layer from the erbium ion solution, and drying and vitrifying the loose layer, to obtain a glass rod;
repeating the foregoing two steps for Z times, and gradually increasing a concentration of erbium ion solution obtained each time, wherein Z is an integer greater than 1;
sintering the glass rod into a solid glass rod; and
preparing the solid glass rod into the erbium-doped fiber.

15. The preparation method according to claim 14, wherein Z is 4.

16. The preparation method according to claim 15, wherein concentrations of erbium ion solution obtained for Z times are respectively Y1, Y2, Y3, and Y4 mol/L; and
a difference between Y2 and Y1 is between 0.001 mol/L and 0.004 mol/L, a difference between Y3 and Y2 is between 0.004 mol/L and 0.01 mol/L, and a difference between Y4 and Y3 is between 0.01 mol/L and 0.016 mol/L.

17. An erbium-doped fiber amplifier, comprising: a pump light source, an optical coupler, and the erbium-doped fiber according to any one of claims 1 to 13, wherein

the pump light source is configured to generate pump light;
the optical coupler is configured to receive signal light and the pump light, and couple the signal light and the pump light into the erbium-doped fiber; and
the erbium-doped fiber is configured to amplify the signal light under an action of the pump light.

18. An optical communications system, comprising:

a transmit end, a receive end, and the erbium-doped fiber amplifier EDFA according to claim 17, wherein
the transmit end is configured to transmit signal light to the receive end through an optical fiber;
the optical fiber is connected to the EDFA;
the EDFA is configured to generate pump light and amplify the signal light based on the pump light; and
the receive end is configured to receive an amplified signal light.

FIG. 1

FIG. 2

301

302

FIG. 3

401 402

FIG. 4

301    501    302

FIG. 5

601  602  603  604

FIG. 6

FIG. 7

EP 4 336 680 A1

FIG. 8

FIG. 9

FIG. 10

FIG. 11

Base tube

Depositing loose
body 1

Glass rod 1

Collapse

Glass rod 2

Depositing loose
body 2

FIG. 12

1301

1303

1302

Optical coupler

1304

Pump light
source

FIG. 13

1401

1402

1403

Transmit end

Signal light

Amplified
signal light

Receive end

FIG. 14

## INTERNATIONAL SEARCH REPORT

| International application No. |
| --- |
| **PCT/CN2022/080265** |

**A. CLASSIFICATION OF SUBJECT MATTER**

H01S 3/067(2006.01)i; H01S 3/16(2006.01)i; H04B 10/2507(2013.01)i

According to International Patent Classification (IPC) or to both national classification and IPC

**B. FIELDS SEARCHED**

Minimum documentation searched (classification system followed by classification symbols)

H01S; H04B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 芯, 掺, 铒, 镱, 稀土, 浓度, 多层, 分层, 环形, 环状, 渐变, 高斯, core, doped, doping, erbium, Er, Yb, ytterbium, rare earth, concentration, layer+, ring+, annular+, gradual+, gauss+

**C. DOCUMENTS CONSIDERED TO BE RELEVANT**

| Category* | Citation of document, with indication, where appropriate, of the relevant passages | Relevant to claim No. |
| --- | --- | --- |
| X | CN 103257394 A (NATIONAL UNIVERSITY OF DEFENSE TECHNOLOGY OF PLA) 21 August 2013 (2013-08-21)<br>    description, paragraphs [0034]-[0050], and figures 1-15 | 1-7, 10, 12, 13, 17, 18 |
| Y | CN 103257394 A (NATIONAL UNIVERSITY OF DEFENSE TECHNOLOGY OF PLA) 21 August 2013 (2013-08-21)<br>    description, paragraphs [0034]-[0050], and figures 1-15 | 8-13, 17, 18 |
| Y | CN 108802898 A (FASTEN GROUP CO., LTD. et al.) 13 November 2018 (2018-11-13)<br>    description, paragraphs [0007]-[0021], and figures 1 and 2 | 14-16 |
| Y | CN 105244741 A (YANGTZE OPTICAL FIBRE AND CABLE JOINT STOCK LIMITED COMPANY) 13 January 2016 (2016-01-13)<br>    description, paragraphs [0006]-[0040], and figures 1-5 | 8-18 |
| X | CN 105207046 A (NANJING UNIVERSITY (SUZHOU) HIGH-TECH INSTITUTE et al.) 30 December 2015 (2015-12-30)<br>    description, paragraphs [0006]-[0041], and figures 1-4 | 1-7, 10, 12, 13, 17, 18 |
| A | CN 103728691 A (CHANGCHUN UNIVERSITY OF SCIENCE AND TECHNOLOGY) 16 April 2014 (2014-04-16)<br>    entire document | 1-18 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 May 2022** | **26 May 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| | International application No. |
|---|---|
| | **PCT/CN2022/080265** |

**C.     DOCUMENTS CONSIDERED TO BE RELEVANT**

| Category* | Citation of document, with indication, where appropriate, of the relevant passages | Relevant to claim No. |
|---|---|---|
| A | CN 112510472 A (HUAWEI TECHNOLOGIES CO., LTD.) 16 March 2021 (2021-03-16) entire document | 1-18 |
| A | JP 2012162433 A (MITSUBISHI CABLE IND. LTD.) 30 August 2012 (2012-08-30) entire document | 1-18 |

Form PCT/ISA/210 (second sheet) (January 2015)

**INTERNATIONAL SEARCH REPORT**
Information on patent family members

International application No.

**PCT/CN2022/080265**

| Patent document cited in search report | | | Publication date (day/month/year) | Patent family member(s) | | | Publication date (day/month/year) |
|---|---|---|---|---|---|---|---|
| CN | 103257394 | A | 21 August 2013 | CN | 103257394 | B | 14 January 2015 |
| CN | 108802898 | A | 13 November 2018 | CN | 208805590 | U | 30 April 2019 |
| CN | 105244741 | A | 13 January 2016 | None | | | |
| CN | 105207046 | A | 30 December 2015 | None | | | |
| CN | 103728691 | A | 16 April 2014 | CN | 103728691 | B | 30 September 2015 |
| CN | 112510472 | A | 16 March 2021 | None | | | |
| JP | 2012162433 | A | 30 August 2012 | JP | 5551631 | B2 | 16 July 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110592797